# EUROPEAN PATENT SPECIFICATION

(11) **EP 2 272 330 B1**
(45) Date of publication and mention of the grant of the patent: **13.06.2012**
(21) Application number: 10168752.3
(22) Date of filing: 07.07.2010
(51) Int. Cl.: A01K 11/00

(54) **Method for manufacturing ear tags for cattle**
Verfahren zur Herstellung von Viehohrmarken
Procédé de fabrication de marques auriculaires pour bétail

(30) Priority: 07.07.2009 NL 2003148
(43) Date of publication of application: 12.01.2011
(73) Proprietor: Plastifran B.V., 5531 AH Bladel (NL)
(72) Inventor: Fieret, Gilles François, 4415 AD, Oostdijk (NL)
(74) Representative: Bras, Pieter

(56) References cited:
- EP-A- 1 690 451

## Description

### BACKGROUND OF THE INVENTION

The invention relates to manufacturing ear tags for cattle.

EP-A-1.690.451 discloses livestock tags as described in the preamble of claims 1 and 9. The disclosed tags consists of a male part and a female part, wherein multiple of the male and female parts are alternately joint together by means of an undisclosed welding device to form a strip in which the parts overlap each other.

Further, a method for manufacturing ear tags for cattle is known, wherein ear tags or parts thereof are injection moulded in series of a limited fixed number, for instance five, as one unity by means of an injection mould and an injection moulding device. By means of an ear tag applicator the ear tag parts can successively be applied to ear-tag the cattle.

The size of the injection moulding device and the complexity of the injection mould define the maximum size of the series. Due to the limited number of ear tags per series the ear tag applicator regularly has to be provided with a new series of ear tag parts.

It is an object of the invention to provide a method with which ear tag parts can be efficiently provided.

### SUMMARY OF THE INVENTION

According to a first aspect the invention provides a method for providing ear tags for the ears of cattle by means of a welding device, wherein the ear tags comprise an ear tag part and an attachment part, wherein the ear tag part is provided with an ear tag plate to abut the ear and a first coupling part and wherein the attachment part is provided with an attachment plate to abut the counter side of the ear and a second coupling part for coupling cooperation with the first coupling part, wherein the first coupling part and the second coupling part pierce the ear in the coupling cooperation, wherein the welding device is provided with a first conveyor for transport of ear tag parts in a first transport direction, and a first pressure pin having a first distal end surface and a second pressure pin having a second distal end surface that can be moved towards each other transverse to the first transport direction for forming a welded joint between the distal end surfaces by means of ultrasonic welding, wherein the first conveyor is provided with ear tag part holders consecutive in the first transport direction and first passages extending through the first conveyor transverse to the first transport direction, wherein the ear tag part holders are mutually positioned for holding the consecutive ear tag parts with an imposed intermediate distance in which the ear tag plates partially overlap each other in abutting contact at the circumferential edge and the first passages are situated below the overlaps positioned in line in the first transport direction, wherein the method comprises the placing of individual ear tag parts in the ear tag part holders of the first conveyor, wherein the main planes of the ear tag plates are situated at the location of the overlap beyond each others extensions, transporting the placed ear tag parts towards the pressure pins, and moving the pressure pins towards the overlap, wherein the first pressure pin is passed through a first passage, wherein the ear tag plates are engaged at the location of the overlap between the distal end surfaces in order to form a weld between them by means of ultrasonic welding, wherein by forming the weld the main planes of the ear tag plates are brought substantially into each others extensions at the location of the weld. In that way an indefinite number of ear tag parts can be formed into a manageable unity in a controlled manner, which unity can then be of any size.

In one embodiment the ear tag part holders are provided with a first straight base plane that may or may not be divided, wherein the first distal end surface when passing through the first pressure pin through the first passage is brought in the extension of the first straight base plane. The first distal end surface of the first pressure pin can be brought into abutting contact with the ear tag parts resting on the base plane at the location of the overlap prior to the ultrasonic welding of the overlap.

In one embodiment the first transport direction is horizontal, wherein the ear tag parts are placed from above in the ear tag holders. The first coupling part can then extend through the first passage and a as a result, considered in transport direction, be confined in the first passage.

In one embodiment the welding device is provided with a first pressure pin holder having several first pressure pins and a second pressure pin holder having several second pressure pins, wherein the first pressure pins and the second pressure pins are positioned consecutively in the first transport direction, wherein simultaneously several welds are formed at the location of overlaps that are consecutive in the first transport direction. As a result the series can be formed quickly.

In one embodiment the ear tag plates of the individual ear tag parts have a circular circumferential edge, and/or the first coupling parts comprise an ear piercing coupling shank that is oriented substantially transverse to the ear tag plate, and/or the first coupling parts comprise an ear piercing coupling shank that is centred with respect to the ear tag plate. The coupling shank is able to lock the ear tag part to the attachment part.

In one embodiment the first conveyor is provided with two chains that extend parallel to each other and that are built up from shackles that are connected to each other so as to hinge, wherein between the chains connection rods extend that extend transverse to the transport direction and that keep the shackles at a fixed mutual distance and between which the first passages are defined, wherein the ear tag part holders are formed by the shackles on which the ear tag plates are situated and the connection rods against which the first coupling part is situated for passing the ear tag parts along. The first coupling part can abut a connection rod of the first passage downstream during transport in the first transport direction.

In one embodiment the ear tag parts are identical in spatial form except for optionally a unique identification code on the ear tag plate. The unique identification code can be used for identifying cattle on the basis of the ear tag in the applied condition.

In one embodiment the ear tag parts welded together are or will be provided with a unique identification code on the ear tag plate. If the ear tag parts, during the method, for instance after ultrasonic welding, are provided with a unique identification code, the risk of mutilating said identification code during the method is reduced

According to a second aspect the invention provides a method for providing ear tags for the ears of cattle by means of a welding device, wherein the ear tags comprise an ear tag part and an attachment part, wherein the ear tag part is provided with an ear tag plate to abut against the ear and a first coupling part and wherein the attachment part is provided with an attachment plate to abut the counter side of the ear and a second coupling part for coupling cooperation with the first coupling part, wherein the first coupling part and the second coupling part pierce the ear in the coupling cooperation, wherein the welding device is provided with a second conveyor for transport of attachment parts in a second transport direction, and a third pressure pin having a third distal end surface and a fourth pressure pin having a fourth distal end surface that can be moved towards each other transverse to the second transport direction for forming a welded joint between the distal end surfaces by means of ultrasonic welding, wherein the second conveyor is provided with attachment part holders consecutive in the second transport direction and second passages extending through the second conveyor transverse to the second transport direction, wherein the attachment part holders are mutually positioned for holding the consecutive attachment parts with an imposed intermediate distance in which the attachment plates partially overlap each other in abutting contact at the circumferential edge and the second passages are situated below the overlaps positioned in line in the second transport direction, wherein the method comprises placing individual attachment parts in the attachment part holders of the second conveyor, wherein the main planes of the attachment plates are situated at the location of the overlap beyond each others extensions, transporting the placed attachment parts towards the pressure pins, and moving the pressure pins towards the overlap, wherein the third pressure pin is passed through a second passage, wherein the attachment plates are engaged at the location of the overlap between the distal end surfaces in order to form a weld between them by means of ultrasonic welding, wherein by forming the weld the main planes of the attachment plates are brought substantially in each others extensions at the location of the weld. In that way an indefinite number of attachment parts can be formed into a manageable unity in a controlled manner, which unity can then be of any size.

In one embodiment the attachment part holders are provided with a second straight base plane that may or may not be divided, wherein the third distal end surface when passing through the third pressure pin through the second passage is brought in the extension of the second straight base plane. The third distal end surface of the third pressure pin can be brought into abutting contact with the attachment parts resting on the base plane at the location of the overlap prior to the ultrasonic welding of the overlap.

In one embodiment the second transport direction is horizontal, wherein the attachment parts are placed from above in the attachment part holders. With their second coupling part the attachment parts can rest on the attachment part holder, wherein the coupling parts, considered in transport direction, are confined.

In one embodiment the welding device is provided with a third pressure pin holder having several third pressure pins and a fourth pressure pin holder having several fourth pressure pins, wherein the pressure pins are positioned consecutively in the second transport direction, wherein simultaneously several welds are formed at the location of overlaps that are consecutive in the second transport direction. In that way the series can be formed quickly.

In one embodiment the attachment plates of the individual attachment parts have a circular circumferential edge, and/or the second coupling parts comprise a hollow accommodation bush that is oriented substantially transverse to the attachment plate, and/or the second coupling parts comprise a hollow accommodation bush that is centred with respect to the attachment plate. In that way the series can be formed quickly. The accommodation bush is able to lock the attachment part to the ear tag part.

In one embodiment the second conveyor is provided with two chains that extend parallel to each other and that are built up from shackles that are connected to each other so as to hinge, wherein between the chains connection bridges extend that extend transverse to the transport direction and that keep the shackles at a fixed mutual distance, wherein the attachment part holders are formed by the connection bridges on which the attachment plates are situated. The second coupling part can abut a centring pin arranged on the connection bridge downstream during transport in the first transport direction.

In one embodiment the first and second transport direction are parallel to each other, wherein preferably the first and third pressure pins are provided on the same pressure pin holder and/or wherein the second and fourth pressure pins are provided on the same pressure pin holder, wherein the pressure pin holders between forming the welds move reciprocally between the first and second conveyor. In that way the same pressure pins can be used for welding both the ear tag parts and the attachment parts, by with the same pressure pins alternately reciprocate welded joints between the ear tag parts situated on the first conveyor and the attachment parts situated on the second conveyor.

In one embodiment the ear tag parts that are welded together on the one hand and the attachment parts that are welded together on the other hand are discharged from the welding device as a first endless chain and second endless chain, respectively, and as a chain are passed through in an ear tag application device, wherein the ear tag application device is provided with a first separator for separating an individual ear tag part from the first chain, a second separator for separating an individual attachment part from the second chain, and a coupling device for bringing the first coupling part and the second coupling part in coupling cooperation in a pig's ear. The chains manufactured in the welding device can as a result, without interruption, be supplied to the ear tag placement device, which may speed up the ear-tagging of cattle.

According to a third aspect the invention provides an assembly as described in claim 17.

In one embodiment ultrasonic welding takes place at a frequency of at least 18000 hertz, preferably within a range of 18000-50000 hertz. Typical frequencies for ultrasonic welding are 20000, 30000, 40000 and 50000 hertz.

In one embodiment ultrasonic welding takes place at a frequency of 35000 hertz with a maximum deviation of 5%. In case of polyurethane ear tags ultrasonic welding preferably takes place at 35000 hertz.

In one embodiment the ear tag parts and the attachment parts are manufactured from synthetic material, preferably a thermoplastic synthetic material, preferably polyurethane.

In one embodiment the ear tag parts are manufactured by means of injection moulding.

In one embodiment the attachment parts are manufactured by means of injection moulding.

### SHORT DESCRIPTION OF THE DRAWINGS

The invention will be elucidated on the basis of a number of exemplary embodiments schematically shown in the attached drawings, in which:
Figures 1A and 1B show isometric views of an ear tag part and an attachment part, which together form an ear tag for cattle;
Figure 2 shows side views of a series of ear tag parts and a series of attachment parts;
Figures 3A-F show side views of steps of a principle of manufacturing the series of attachment parts;
Figures 4A-F show side views of steps of a principle of manufacturing the series of ear tag parts;
Figure 5 shows a welding device for the automated manufacturing of the series of attachment parts and ear tag parts;
Figures 6A-F show the operation of the welding device according to figure 5; and
Figure 7 shows an ear tag device with the welding device according to figure 5.

### DETAILED DESCRIPTION OF THE DRAWINGS

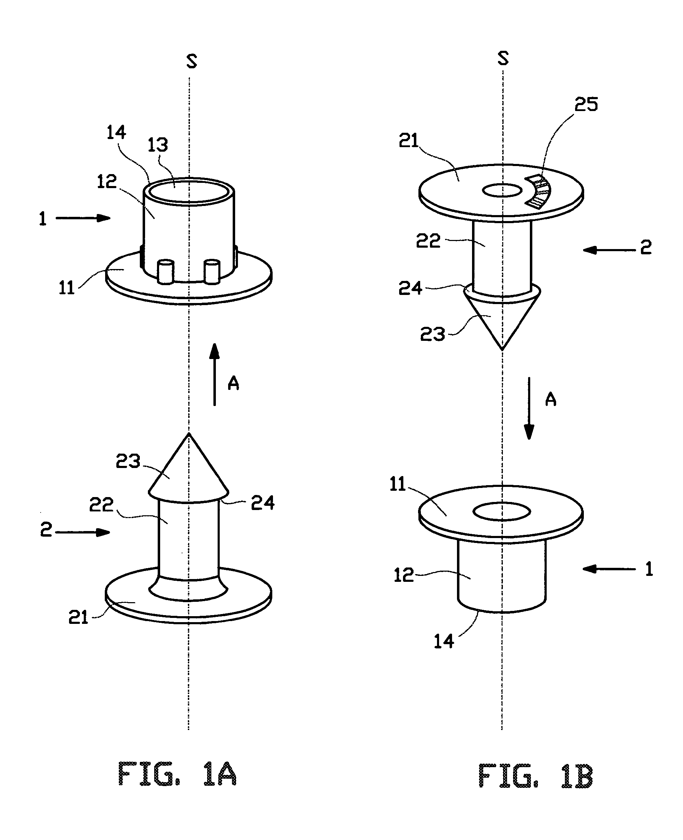

Figure 1A and 1B show a synthetic attachment part 1 and a synthetic ear tag part 2, in this example polyurethane, which together form the parts for an ear tag for ears of cattle, particularly piglets. The ear tag part 2 comprises a disk-shaped ear tag plate 21, a coupling shank projecting from the ear tag plate 21, and a conical locking body 23 having a base 24 at a distal outer end of the coupling shank 22. The ear tag part 2 is provided with a unique identification code 25, in the form of a barcode, with which the cattle can be identified. The attachment part 1 comprises a disk-shaped attachment plate 11 and an accommodation bush 12 projecting therefrom with a cavity 13 and an end edge 14. The diameter of the coupling shank 22 is smaller than the one of the cavity 13 and the diameter of the base 24 of the locking body 23 is larger than the diameter of the cavity 13. The attachment part 1 and the ear tag part 2 can be slid into each other along the centre line S in the direction A, wherein the coupling shank 22 pierces the ear and the base 24 of the conical locking body 23 subsequently secures itself self-locking in abutting contact with the edge 14.

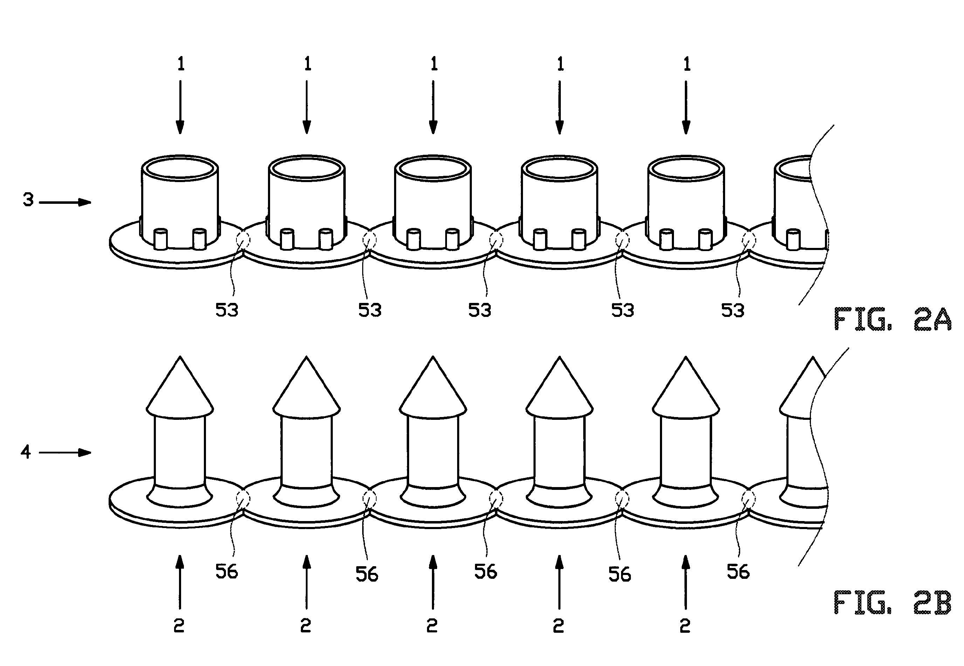

Figure 2A shows a first straight series 3 of identically shaped attachment parts 1 which by means of welded joints 53 are connected to each other. Figure 2B shows a second series 4 of identically shaped ear tag parts 2 that are connected to each other by means of welded joints 56. The ear tag parts 2 in this series 4 differ from each other only as regards the identification code 25 that has been arranged on or in the material of the ear tag part 2 in question. Said series 3, 4 can be placed as a cartridge in an ear tag applicator for applying the ear tags one by one onto the ears of the cattle.

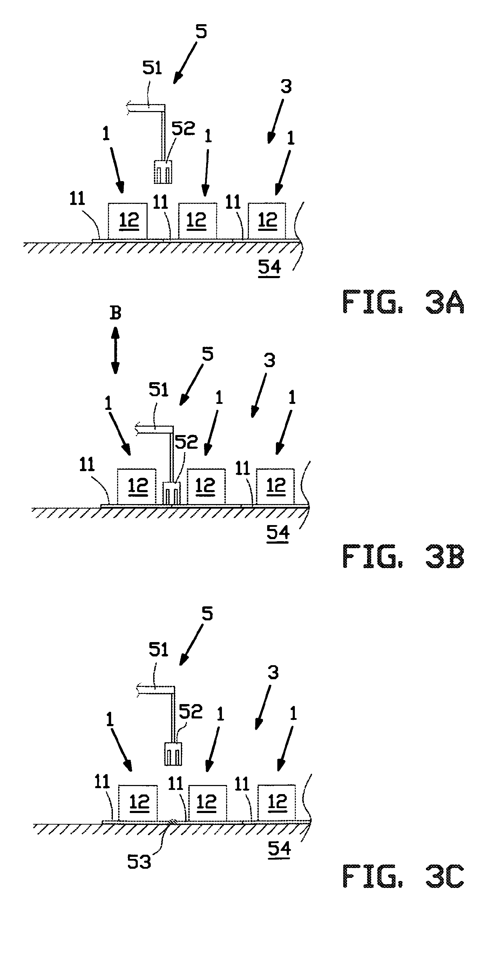

Figures 3A-F show a schematically shown part of an ultrasonic welding device 5 for the manufacturing of said welded joints 53, 56 comprising a stamp 51 and a sonotrode 52 attached to the stamp 51, which sonotrode is vertically movable in direction B and towards a level basis 54. A principle of manufacturing the series 3, 4 is further elucidated below on the basis of figures 3A-3F.

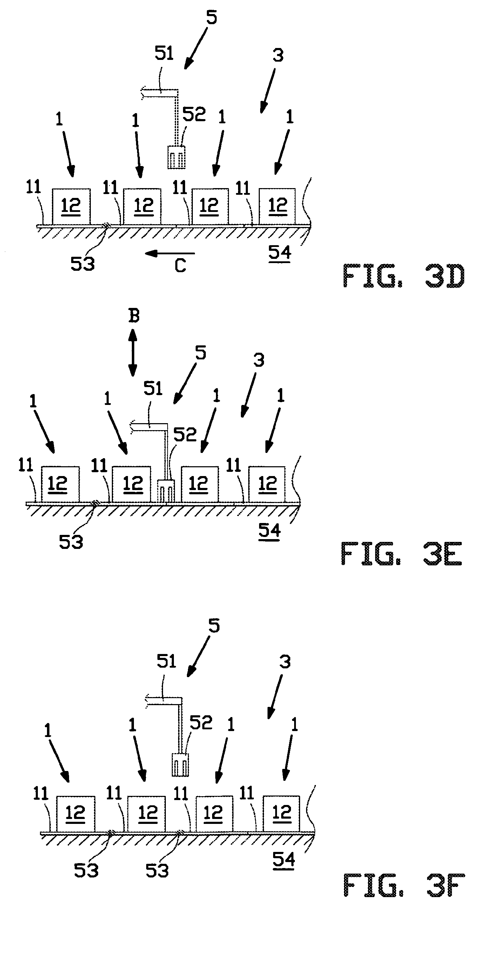

When manufacturing the first series 3 two attachment parts 2 with the attachment plates 11 are brought adjacently to each other, preferably flat on the basis 54 as shown in figure 3A, wherein a small recess or elevation in the circumferential edge of the attachment plates 11 makes it possible to place the attachment plates 11 in partial overlap with each other on the circumferential edge. Subsequently the sonotrode 52 is moved downwards in direction B as shown in figure 3B. The sonotrode 52 is switched on when it arrives at a predetermined distance against or at a short distance from the overlap between the attachment plates 11. At an ultrasonic frequency of 35000 hertz with a deviation of 5% at the most, the sonotrode 52 transfers vibrations at the location of the contact point of the circumferential edges of the attachment plates 11, as a result of which heat is developed, wherein the material locally melts together in a melting bath and the fixed welded joint 53 is created that extends over a portion of the attachment plates' 11 own circumference. Subsequently the sonotrode 52 returns to a starting welding position, upwards in direction B like in figure 3C. Subsequently, as shown in figure 3D, the series of attachment parts 3 is moved in a passage direction C over one drag size substantially equalling the diameter of one attachment plate 11, after which the previous steps are repeated, as shown in figure 3E and figure 3F in order to manufacture the first series of attachment parts 3 according to figure 2A.

Alternatively the attachment plates 11 can be placed against and/or adjacent to each other, wherein for instance extra material is added at the location where the welded joint 53 is formed for forming an intermediate bridge between the first and the second attachment part. Alternatively the attachment plates 11 are placed partially onto each other at the circumferential edges.

Alternatively several attachment parts 3, for instance five, can be placed next to each other and simultaneously welded. The welding device 5 is then provided with a head having several sonotrodes, for instance four, or a divided sonotrode, wherein the welded joints 53 are realised in four places at the same time.

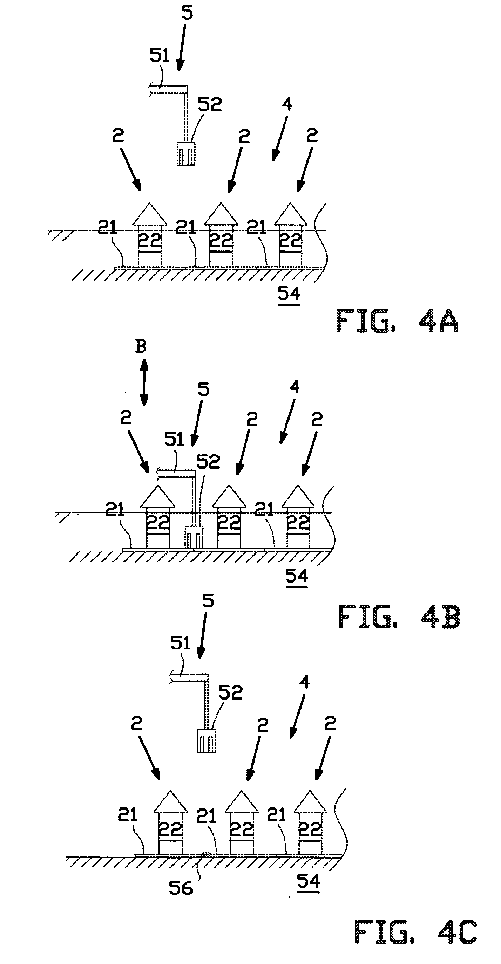

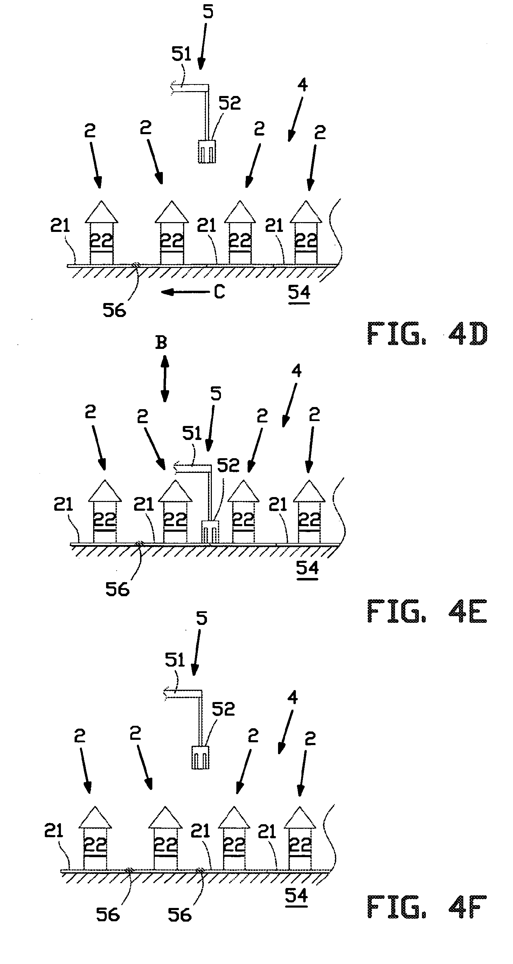

Figure 4A-F show the steps of manufacturing the second series of ear tag parts 4. The method steps are identical to those of figure 3A-F, wherein the ear tag parts 2 with the ear tag plates 21 are ultrasonically welded together. Prior to or after the ultrasonic welding, the identification code 25 can be arranged on the ear tag plate 21 using a laser and/or a printer and/or a hot stamp.

In this embodiment the series are formed with a number of individually injection moulded attachment parts 1 or ear tag parts 2. Said parts 1 , 2 may also be part of a sub series already formed by injection moulding of several attachment parts 1 or several ear tag parts 2, which sub series are connected to each other by means of ultrasonic welding as described above.

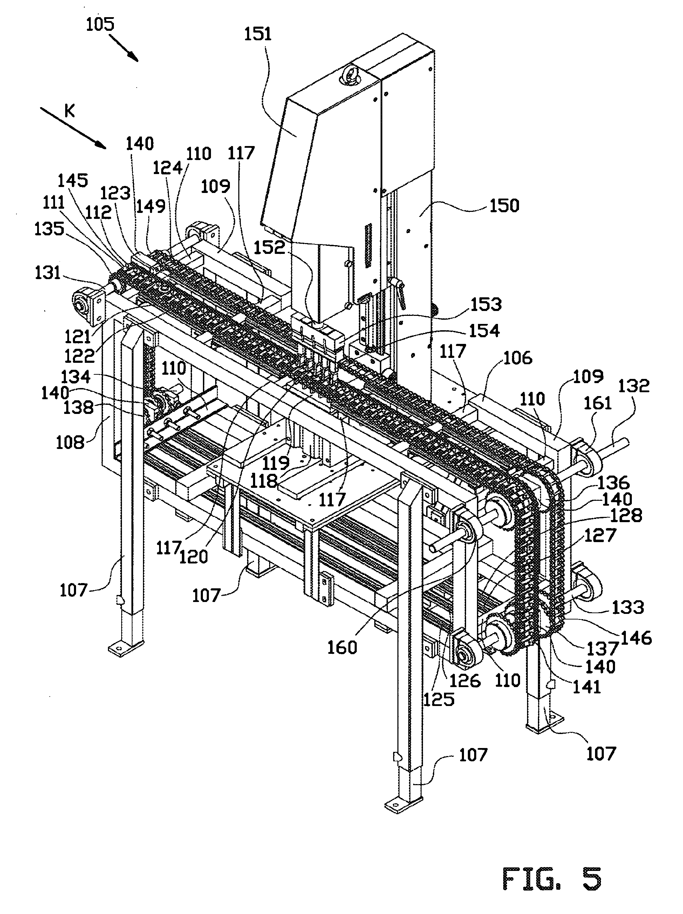

Figure 5 shows a welding device 105 for automated ultrasonic welding ear tag parts 2 and attachment parts 3 together according to the principle as discussed above.

The welding device 105 comprises an elongated steel frame 106 which is placed on a substantially level basis by means of four adjustable legs 107. The frame 106 comprises a first rectangular side frame 108, spaced apart therefrom and parallel thereto a second rectangular side frame 109 and for cross beams 110 that connect the side frames 108, 109 to each other in their outermost corners.

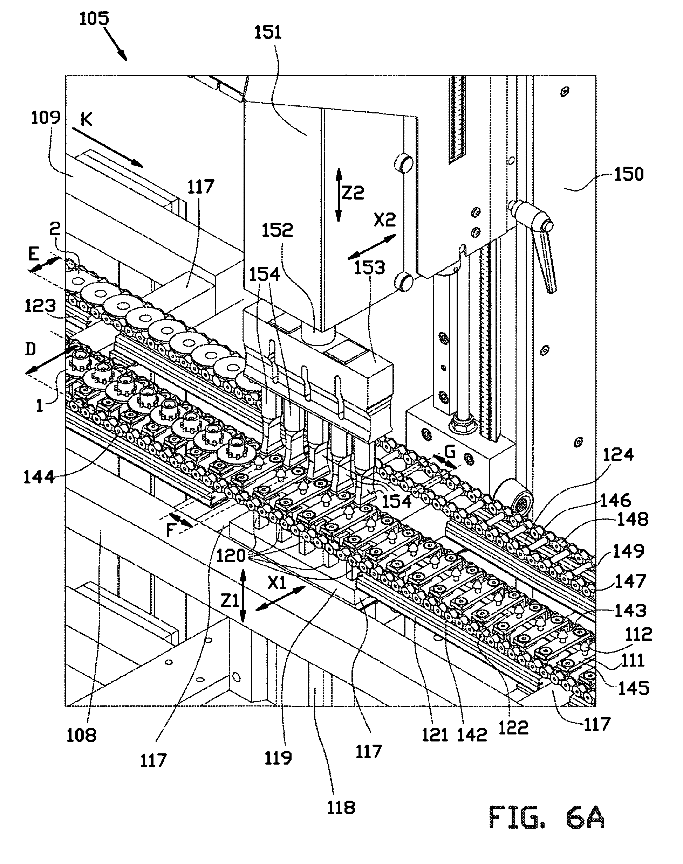

Between the two cross beams 110 situated in the upper surface of the frame 106, the welding device 105 is provided with four spaced apart, mutually parallel bearing girders 117. The welding device 105 is provided with a first guide rail 121, a second guide rail 122, which together form a pair, and a third guide rail 123 and a fourth guide rail 124, that also form a pair. The guide rails 121, 122, 123, 124 extend parallel to the side frames 108, 109 and are borne by the bearing girders 117. The distance between the first guide rail 121 and the second guide rail 122 is larger than the distance between the third guide rail 123 and the fourth guide rail 124. At the location of the bearing girders 117 the first, second, third and fourth guide rails 121-124 are divided into segments that are situated in each others extension. Between the middle two bearing girders 117 guide rails 121-124 are not present. Instead thereof the welding device 105 is provided with a welding table drive 118 and a welding table 119 arranged under the guide rails 121-124, which welding table is mounted on the outer end of the welding table drive 118 facing the upper surface of the frame 106. As shown in figure 6A five upwardly oriented pressure pins 120 are situated on the welding table 119, which pressure pins in the top position of the welding table 119 with their distal end surfaces extend between the middle bearing girders 117. The welding table drive 118 is adapted for in a first vertical direction Z1 moving the welding table 119 up and down and for in a first horizontal direction X1 moving it reciprocally.

As shown in figure 5 the welding device 105 is provided with a fifth guide rail 125, a sixth guide rail 126, a seventh guide rail 127 and an eighth guide rail 128 which, in the bottom surface of the frame 106 between the two cross beams 110 situated in the bottom surface, extend parallel to each other and parallel to the side frames 108, 109. Considered in vertical direction the fifth, sixth, seventh and eighth guide rails 125-128 are situated straight below the first, second, third and fourth guide rails 121-124, respectively.

The welding device 105 comprises a first axis of rotation 1 31, a second axis of rotation 132, a third axis of rotation 133 and a fourth axis of rotation 134 which in a rectangular arrangement corresponding to the rectangular shape of the side frames 108, 109, are bearing mounted to the corners of the side frames 108, 109. The first, second, third and fourth axis of rotation 131-134 extend transverse to the side frames 108, 109 parallel to the cross beams 110.

Each axis of rotation 131-134 is provided with a bearing block 140 and on both sides thereof axis segments that can be rotated independently with respect to each other.

The first axis of rotation 131 is provided with four substantially identical first toothed wheels 135. The first toothed wheels 135 are spaced apart from each other, in the extension of and with the same intermediate distances as between the first, second, third and fourth guide rails 121-124 extending transverse to the first axis of rotation 131. The first toothed wheels 135 in the extension of the first and second guide rails 121-122 are placed on the first axis segment, and the first toothed wheels 135 in the extension of the third and fourth guide rails 123-124 are placed on the second axis segment.

The second axis of rotation 132 is provided with four substantially identical second toothed wheels 136. The second toothed wheels 136 are spaced apart from each other, in the extension of and with the same intermediate distances as between the first, second, third and fourth guide rails 121-124 extending transverse to the second axis of rotation 132. The second toothed wheels 136 have a larger diameter than the first toothed wheels 135. The second toothed wheels 136 in the extension of the first and second guide rails 121-122 are placed on the first axis segment, and the second toothed wheels 136 in the extension of the third and fourth guide rails 1 23-1 24 are placed on the second axis segment. The first axis segment of the second axis of rotation 132 is operationally connected to a first chain drive 160 connected to the frame 106 and the second axis segment of the second axis of rotation 132 is operationally connected to a second chain drive 161 connected to the frame 106.

The third axis of rotation 133 is provided with four substantially identical third toothed wheels 137. The third toothed wheels 137 are spaced apart from each other, in the extension of and with the same intermediate distances as between the fifth, sixth, seventh and eighth guide rails 125-128 extending transverse to the third axis of rotation 133. The third toothed wheels 137 have the same diameter as the second toothed wheels 136. The third toothed wheels 137 in the extension of the first and second guide rails 121-122 are placed on the first axis segment, and the third toothed wheels 1 37 in the extension of the third and fourth guide rails 123-124 are placed on the second axis segment.

The fourth axis of rotation 134 is provided with four substantially identical fourth toothed wheels 138. The fourth toothed wheels 138 are spaced apart from each other, in the extension of and with the same intermediate distance as between the fifth, sixth, seventh and eighth guide rails 125-128 extending transverse to the fourth axis of rotation 134. The fourth toothed wheels 138 have a larger diameter than the first toothed wheels 135, but a smaller diameter than the second and third toothed wheels 136, 137. The fourth toothed wheels 138 in the extension of the first and second guide rails 121-122 are placed on the first axis segment, and the fourth toothed wheels 138 in the extension of the third and fourth guide rails 123-124 are placed on the second axis segment.

As shown in figures 6A-6F the welding device 105 is provided with a first circulating conveyor or a first circulating chain assembly 141, that is driven in pulling manner by the first chain drive 1 60. The first chain assembly 141 comprises a circulating first roller chain 142 and a similar circulating second roller chain 143. As shown in figure 6A, the first roller chain 142 and the second roller chain 143 are provided with shackles 144 that are connected to each other so as to hinge. At the location of the shackles 144, the first roller chain 142 and the second roller chain 143 are connected to each other at a mutual first chain distance D by means of connection bridges 145, that extend between two opposite shackles 144. Each connection bridge 145 comprises a bearing surface 111 extending above the first roller chain 142 and the second roller chain 143 at the side of the first chain assembly 141, which side faces away from the guide rails 121-124. In the middle the connection bridges 145 are provided with a centring pin 112 that is upright from the bearing surface 111. The centring pin 112 has a smaller diameter than the smallest inner diameter of the accommodation bush 12 of the attachment part 1 as shown in figures 1A and 1B. The centre lines of the upright centring pins 112 are at a carrying distance F from each other. In this embodiment the carrying distance F corresponds with one connection bridge 145 per two shackles 144.

The welding device 105 is provided with a second circulating conveyor or a second circulating chain assembly 146 that is driven in a pulling manner by the second chain drive 161, independent with respect to the first chain assembly 141. The second circulating chain assembly 146 comprises a circulating third roller chain 147 and a circulating fourth roller chain 148. The third roller chain 147 and the fourth roller chain 148, just like the first roller chain 142 and the second roller chain 143 of the first chain assembly 141, are provided with shackles 144 that are coupled to each other so as to hinge. The third roller chain 147 and the fourth roller chain 148 are connected to each other at a mutual second chain distance E by means of connection rods 149 which per shackle 144 form a continuation of one of the hinge pins between the shackles 144. The centre lines of the connection rods 149 are at a confinement distance G from each other. In this embodiment the first confinement distance G corresponds with one connection rod 149 per two shackles 144. The shackles 144 function as points of support divided in the upper surface of the welding device 105, which points together form a divided straight base plane.

The first chain assembly 141 and the second chain assembly 146 are alternately driven by the first chain drive 160 and the second chain drive 161, respectively, in a horizontal transport direction K. The carrying distance F and the confinement distance G between the centring pins 112 and the connection rods 149, respectively, are equal to each other. The distance between each two consecutive pressure pins 120 of the five pressure pins 120 arranged on the welding table 119 is equal to the carrying distance F and the confinement distance G. The carrying distances F in the first chain assembly 141 and the confinement distance G in the second chain assembly 146 are staggered half a carrying distance F or confinement distance G with respect to each other, in order to effect that the centring pins 112, considered in the horizontal upper surface and perpendicular to the transport direction K, are situated at the location of the middle between the consecutive connection rods 149.

The first guide rail 121 and the first toothed wheel 135 and second toothed wheel 136 situated in its extension, together with the fifth guide rail 125 and the third toothed wheel 137 and fourth toothed wheel 138 situated in its extension form a circulating first guide path for the first roller chain 142 of the first chain assembly 141. Parallel to and at chain distance D from the first guide path the second guide rail 122 and the first toothed wheel 135 and second toothed wheel 136 situated in its extension, together with the sixth guide rail 126 and the third toothed wheel 137 and fourth toothed wheel 138 situated in its extension, form a circulating second guide path for the second roller chain 143 of the first chain assembly 141.

The third guide rail 123 and the first toothed wheel 135 and second toothed wheel 136 situated in its extension, together with the seventh guide rail 127 and the third toothed wheel 137 and fourth toothed wheel 138 situated in its extension form a circulating third guide path for the third roller chain 147 of the second chain assembly 146. Parallel to and at chain distance E from the first guide path the fourth guide rail 124 and the first toothed wheel 135 and second toothed wheel 136 situated in its extension, together with the eighth guide rail 128 and the third toothed wheel 137 and fourth toothed wheel 138 situated in its extension form a fourth guide path for the fourth roller chain 148 of the second chain assembly 146.

Due to the first, second, third and fourth guide rails 121-124 being absent at the location of the welding table 119, the first chain assembly 141 and the second chain assembly 146 are suspended freely above the welding table 119. The chain assemblies 141, 146 are kept at tension as a result of which the freely suspended part is straight.

As shown in figure 5 the welding device 105 is provided with a steel column 150, borne by the frame 106 and extending vertically upwards. At the upper outer end, the column 150 comprises a stamp drive 151 that extends above the welding table 119. At the side of the stamp drive 151 oriented to the welding table 119 the welding device 105 is provided with a stamp 152 and a sonotrode 153 attached to an outer end thereof. The sonotrode 153 is provided with five weld pressure pins or welding heads 154 having a distal end surface and situated in a line in the transport direction K, wherein the distance between two consecutive welding heads substantially equals the carrying distance F and the confinement distance G between the connection rods 145 and the connection bridges 149, respectively. The stamp drive 151 is adapted for in a second horizontal direction X2 reciprocally moving the stamp 152 and for in a second vertical direction Z2 moving it up and down.

Figure 6A-F show the welding device 105 according to figure 5 when operational. In figure 6A the situation is shown in which both axis segments of the second axis of rotation 132 are driven by the first chain drive 160 and the second chain drive 161, respectively, as a result of which the first chain assembly 141 and the second chain assembly 146 have been moved over the guide rails 121-124 in the transport direction K.

During movement of the first chain assembly 141 from a first vibration sorting device known per se (not shown), individual attachment parts 1 are supplied in a singular line and in the position as shown in figure 1A, thus with its accommodation bush 12 facing upwards, and accommodated on the consecutive centring pins 112 of the first chain assembly 141. During transport in direction K the attachment plate 11 is carried on both sides by the bearing surface 111 of the connection bridge 145. The carrying distance F is smaller than the diameter of the attachment plate 11, and the connection bridges 145 in the transport direction K are narrower than the diameter of the attachment plates 11. As a result thereof the attachment parts 1 stuck consecutively on the connection rods 145 have come to be in a mutual overlap with the in transport direction K opposite circumferential edge portions of the attachment plates 11, which overlap during transport to the welding heads 1 54 is maintained. At the location of the imposed overlaps the attachment plates 11 are freely suspended between the carrying connection bridges 145.

During the movement of the second chain assembly 146 from a second vibration sorting device known per se (not shown), individual ear tag parts 2 are supplied in a singular line and in the position as shown in figure 1B, thus with its coupling shank 22 facing downwards, and accommodated in consecutive intermediate spaces between the connection rods 149 of the second chain assembly 146. During transport in transport direction K the coupling shank 22 abuts the connection rod 149 situated downstream to be propelled onwards by it, wherein the ear tag plate 21 is carried on both sides by the shackles 144 of the third roller chain 147 and the fourth roller chain 148, respectively, wherein the shackles 144 comprise points of support which together form the straight base plane for the ear tag plate 21. The second confinement distance G is smaller than the diameter of the ear tag plate 21. As a result thereof the ear tag parts 2 inserted consecutively in between the connection rods 149 have come to be in a mutual overlap with the in transport direction K opposite circumferential edge portions of the ear tag plates 21, which overlap during transport to the welding heads 154 is maintained. At the location of the imposed overlap the ear tag plates 21 are freely suspended between the carrying shackles 144.

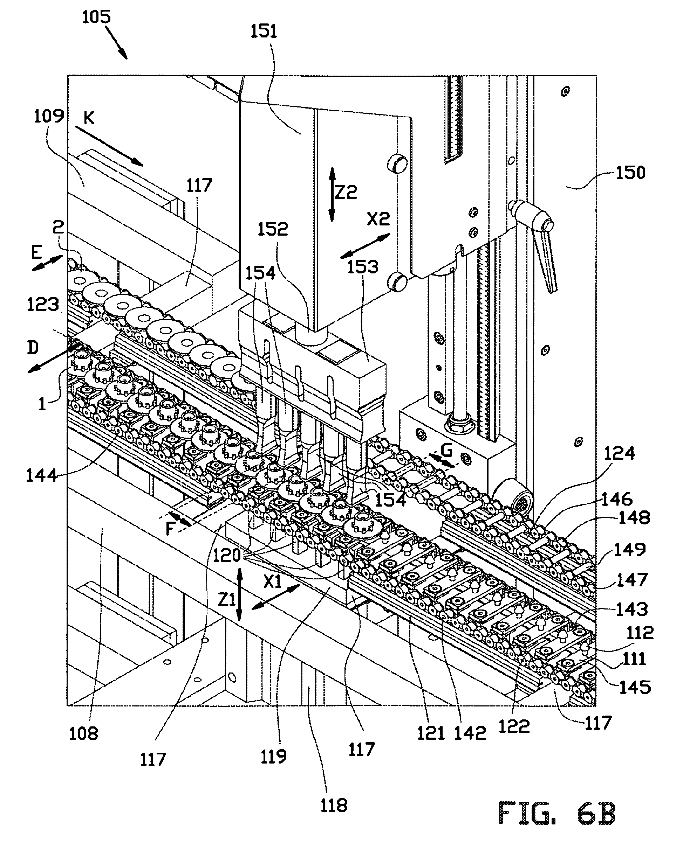

Figure 6B shows the situation in which the first axis segment of the second axis of rotation 132 is further driven by the first chain drive 160. The first chain assembly 141 in the transport direction K is moved over the first and second guide rails 121-122 situated in the upper surface of the frame 106. In that case six consecutive attachment parts 1 are positioned above the welding table 119. The pressure pins 120 of the welding table 119 are situated straight below the consecutive overlaps between the attachment plates 11. Actuation of the chain drive 160 is temporarily interrupted, as a result of which the first and second chain assembly 141, 146 are at a standstill. The stamp 152 and the sonotrode 153 connected thereto with the five welding heads 154 is suspended in a first welding position over the centre between the first and the second roller chain 142, 143.

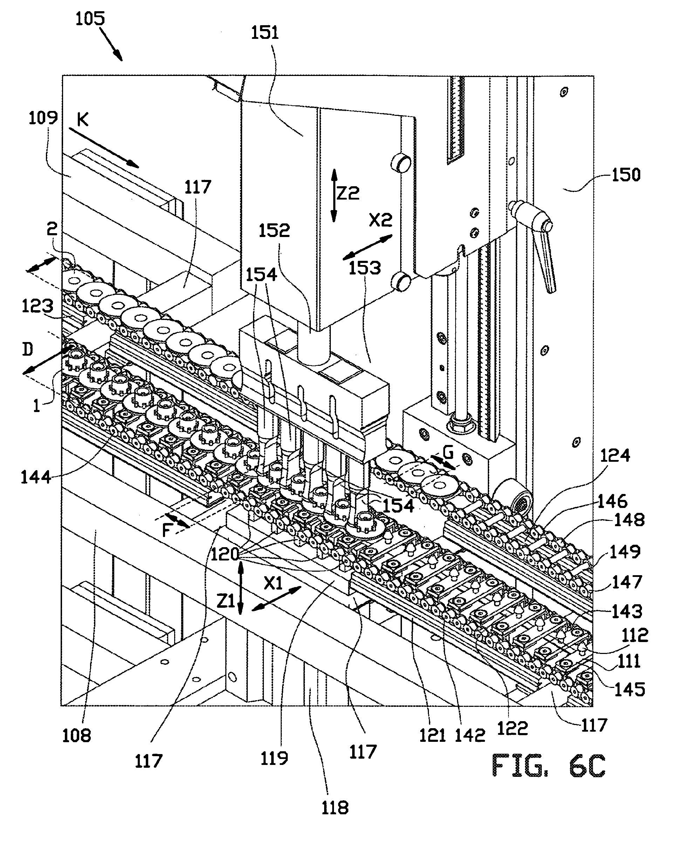

Figure 6C shows the situation wherein the welding table 119 is driven by the welding table drive 118 and as a result thereof is moved upwards in the first vertical direction Z1 in the direction of the sonotrode 153. The pressure pins 120 present on the welding table 119 have come to abut the attachment parts 1 under the overlap between the consecutive attachment plates 11 in order to form a level support surface under the attachment parts. The distal end surfaces of the pressure pins 1 20 are in the same plane as the bearing surfaces of the connection bridges 145. Almost simultaneously the drive mechanism 151 is actuated for driving the stamp 152. As a result the stamp 152 moved downwards in the second vertical direction Z2 in the direction of the welding table 119. The six attachment parts 1 supported by the pressure pins 120, at the location of the overlap between the attachment plates 11 are clamped in between the five welding heads 154 and the five pressure pins 120. The five welding heads 154 are situated straight above the pressure pins 120 and straight above the overlaps and are subsequently ultrasonically actuated as a result of which a melting bath arises. The portions overlapping like tiles merge into each other as a result of which the attachment plates 11 have come to lie in the same plane. Thus a series 3 of six attachment parts 1 connected through ultrasonic welding is created.

Simultaneously the second axis segment of the second axis of rotation 132 is further driven by the second chain drive 161, as a result of which the second chain assembly 146, parallel to the first chain assembly 141, has transported six consecutive ear tag parts 2 over the same distance. Said ear tag parts 2 are also ready for, after the attachment parts 1 have been connected to each other by the welding heads 154, being connected to each other by said welding heads 154.

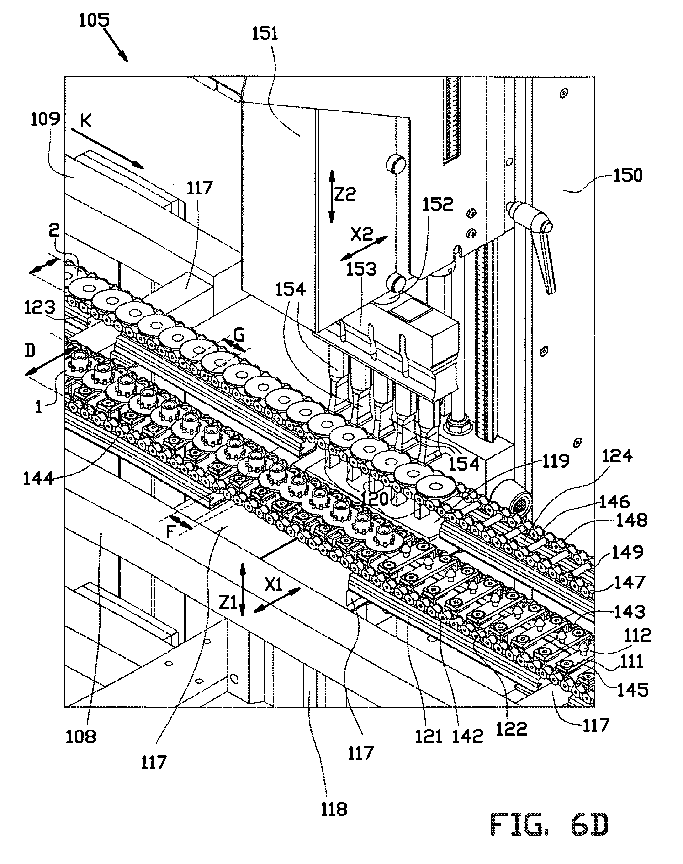

Figure 6D shows the situation in which the stamp 152 and the sonotrode 153 connected thereto is moved upwards in the second vertical direction Z2 after finishing the ultrasonic welding of the six attachment parts 1. The stamp drive 151 has moved the sonotrode 153 from the first welding position above the middle between the first and the second roller chain 142, 143 sidewards in the second horizontal direction X2. The sonotrode 153 with the welding heads 154 is in a second welding position straight above the middle between the third and the fourth roller chain 147, 148. Almost simultaneously the welding table 119 is moved downwards in the first vertical direction Z1 by the welding table drive 118, wherein the abutting contact between the pressure pins 120 and the attachment parts 1 is ended. Subsequently the welding table 119 is moved in the first horizontal direction X1 to a position below the second chain assembly 146.

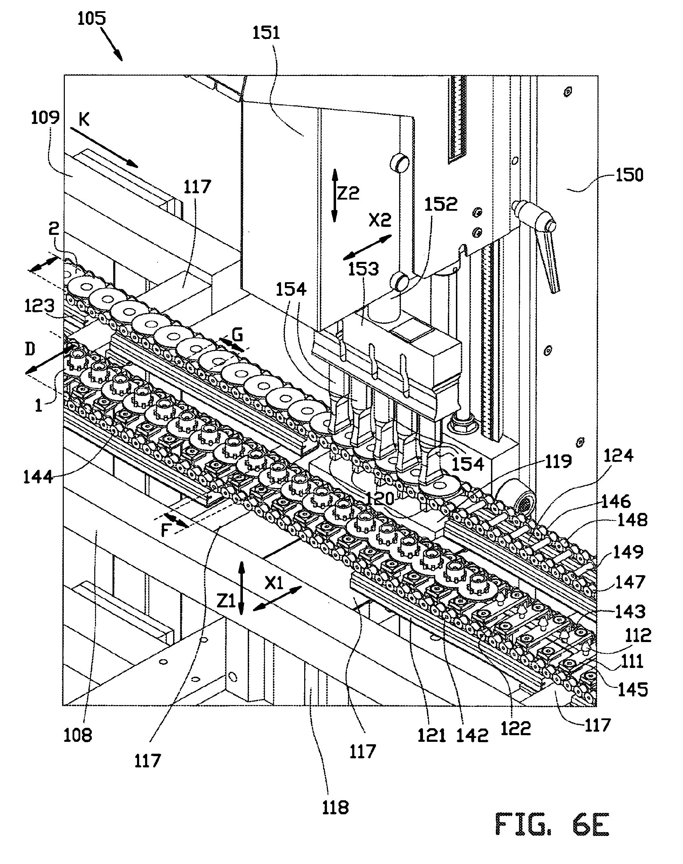

Figure 6E shows the situation in which the welding table 119 is driven by the welding table drive 118 and as a result thereof is moved upwards in the first vertical direction Z1 in the direction of the sonotrode 153. The pressure pins 120 present on the welding table 119 have come to abut the ear tag parts 2 under the overlaps between the consecutive ear tag plates 21, wherein the distal end surfaces are situated in the same plane as the upper support surfaces of the third roller chain 147 and fourth roller chain 148 on which the ear tag plates 21 are situated. Almost simultaneously the drive mechanism 151 is actuated for driving the stamp 152. As a result the stamp 152 is moved downwards in the second vertical direction Z2 in the direction of the welding table 119. The six ear tag parts 2 supported by the pressure pins 120, at the location of the overlap between the ear tag plates 21 are clamped in between the five welding heads 154 and the five pressure pins 120. The five welding heads 154 are situated straight above the overlap and are subsequently ultrasonically actuated as a result of which a melting bath arises. The portions overlapping like tiles merge into each other as a result of which the ear tag plates 21 have come to lie in the same plane. Thus a series 4 of six ear tag parts 2 connected through ultrasonic welding is created.

Simultaneously the first axis segment of the second axis of rotation 132 is further driven by the first chain drive 160, as a result of which the first chain assembly 141 has transported six unwelded consecutive attachment parts 1 in direction K under the sonotrode 153. The already welded attachment parts 1 are transported onwards in the direction of the second axis of rotation 132. The attachment parts 1 are ready for, after the ear tag parts 2 have been connected to each other by the welding heads 154, being connected to each other by said welding heads 1 54.

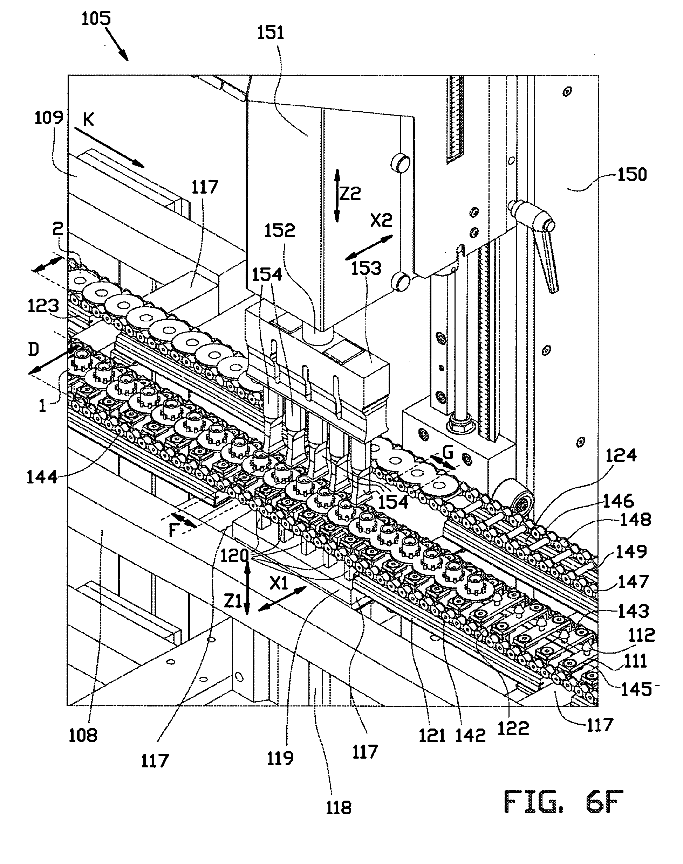

Figure 6F shows the situation in which the stamp 152 and the sonotrode 153 connected thereto is moved upwards in the second vertical direction Z2 after finishing the ultrasonic welding of the six ear tag parts 2. The stamp drive 151 has moved the sonotrode 153 from the second welding position above the middle between the third and fourth roller chain 147, 148 sidewards in the second horizontal direction X2. The sonotrode 153 with the welding heads 154 is in the first welding position straight above the middle between the first and the second roller chain 142, 143. Almost simultaneously the welding table 119 is moved downwards in the first vertical direction Z1 by the welding table drive 118, wherein the abutting contact between the pressure pins 120 and the ear tag parts 2 is ended. Subsequently the welding table 119 is moved in the first horizontal direction X1 to a position below the first chain assembly 141.

The steps shown in figure 6A-F can be repeated to form long, theoretically even infinite series 3, 4 of attachment parts 1 and ear tag parts 2, respectively. By infinite a large number of parts 1, 2 is meant, for instance several hundreds per series.

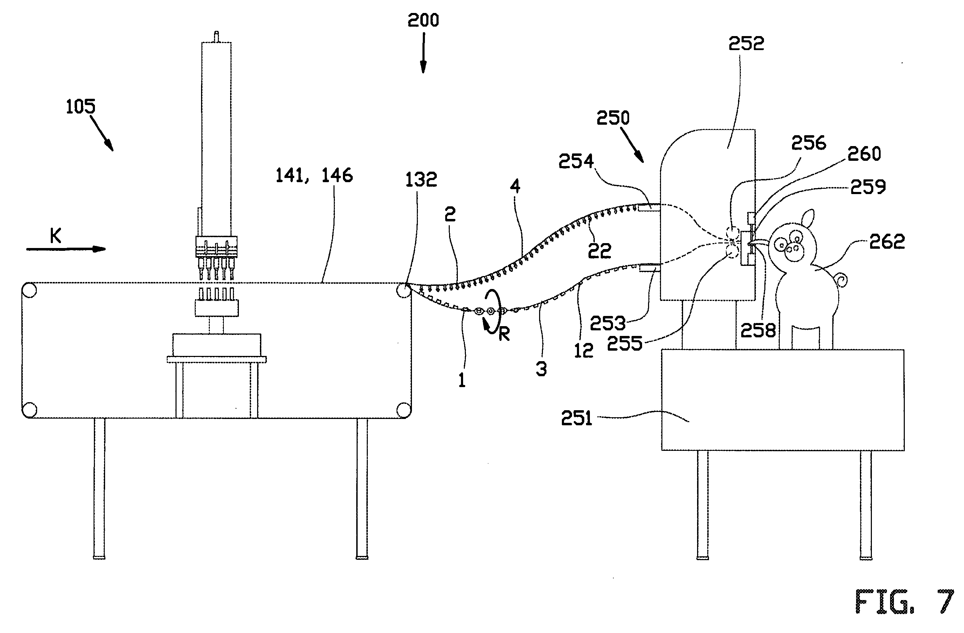

Figure 7 shows how the welding device 105 is part of the ear tag device 200 for ear-tagging cattle, that furthermore comprises an application device 250. The series 3, 4 obtained by means of the method steps described above are guided from the second axis of rotation 132 in the direction of the application device 250.

The application device 250 comprises a frame 251 and a joining device 252 placed on the frame 251. The joining device 252 is provided with a first insertion slide 253, a second insertion slide 254 situated above it, a first conveying device 255 positioned close to the first insertion slide 253, and a second conveying device 256 positioned close to the second insertion slide 254. The first series 3 of attachment parts 1 with an outer end thereof is guided from the first chain assembly 141 towards the first insertion slide 253, where the first conveying device 255 engages onto the attachment parts 1 situated at the outer end of the first series 3. Before the series 3 enters the joining device 251, the attachment parts 1 are gradually rotated in direction R, for in the end having made half a turn in direction R, without having broken the series 3. The second series 4 of ear tag parts 2 with its outer end is guided from the second chain assembly 146 towards the second insertion slide 254, where the second conveying device 256 engages onto the ear tag parts 2 situated at the outer end of the second series 4.

The joining device 251 is provided with a datum surface 258, a sticking pin 259 that is movable up and down at a short distance above it and a drive 260 for moving the sticking pin 259 to and from the datum surface 258. The attachment part 1 situated at the outer end of the series 3 of attachment parts 1 is separated from the series 3 by the first conveying device 255 by the inside work (not shown) of the joining device 251, subsequently transported to the datum surface 258 and with the accommodation bush 12 facing downwards brought in abutting contact on the datum surface 258. Ear tag part 2 situated at the outer end of the series 4 of ear tag parts 2 is separated from the series 4 by the second conveying device 256 by the inside work (not shown) of the joining device 251, transported to the sticking pin 259 and applied with the coupling shank 22 facing downwards so that the sticking pin 259 is positioned straight above the coupling shank.

Subsequently an ear of a piece of cattle, as shown in figure 7 for instance the ear of a piglet 262, can be arranged between the attachment part 1 situated in the datum surface 258 and the ear tag part 2 situated below the sticking pin 259. The drive 260 can subsequently be actuated after which the sticking pin 259 is driven down like an ear tag applicator in a step that is not shown. The sticking pin 259 then pierces into the hollow coupling shank 22 and takes along the ear tag part 2 in its motion. The coupling shank 22 then pierces the ear of the pig 262 and locks itself in the accommodation bush 12 of the attachment part 1 that is stopped on the datum surface 258. These steps can be repeated several times, wherein the first conveying device 255 and the second conveying device 256 each time prepare a new pair of an attachment part 1 and an ear tag part 2 on the datum surface 258 and below the sticking pin 259, respectively.

Alternatively the series 3, 4 that are suspended between the welding device 105 and the application device 250 are broken. In that case the series 3, 4 formed by the welding device 105 are rolled up, wherein an outer end of the rolls are entered into the application device 250 at another location for ear-tagging the piglets 262 there.

The above description is included to illustrate the operation of preferred embodiments of the invention and not to limit the scope of the invention. Starting from the above explanation many variations that fall within the scope of the present invention will be evident to an expert.

## Claims

1. Method for providing ear tags for the ears of cattle by means of a welding device (105), wherein the ear tags comprise an ear tag part (2) and an attachment part (1), wherein the ear tag part (2) is provided with an ear tag plate (21) to abut the ear and a first coupling part (22) and wherein the attachment part (1) is provided with an attachment plate (11) to abut the counter side of the ear and a second coupling part (12) for coupling cooperation with the first coupling part (22), wherein the first coupling part (22) and the second coupling part (12) pierce the ear in the coupling cooperation, wherein the welding device (105) is provided with a first conveyor (146) for transport of ear tag parts (2) in a first transport direction (K), and a first pressure pin (120) having a first distal end surface and a second pressure pin (154) having a second distal end surface that can be moved towards each other (Z1; Z2) transverse to the first transport direction (K) for forming a welded joint between the distal end surfaces by means of ultrasonic welding, wherein the first conveyor (146) is provided with consecutive ear tag part holders (144, 149) in the first transport direction and first passages extending through the first conveyor transverse to the first transport direction, wherein the ear tag part holders (144, 149) are mutually positioned for holding the consecutive ear tag parts (2) with an imposed intermediate distance (G) in which the ear tag plates (21) partially overlap each other in abutting contact at the circumferential edge and the first passages are situated below the overlaps positioned in line in the first transport direction (K), wherein the method comprises the placing of individual ear tag parts (2) in the ear tag part holders (144, 149) of the first conveyor (146), wherein the main planes of the ear tag plates (21) are situated at the location of the overlap beyond each others extensions, transporting the placed ear tag parts towards the pressure pins (120, 154), and moving the pressure pins towards the overlap, wherein the first pressure pin (120) is passed through a first passage, wherein the ear tag plates (21) are engaged at the location of the overlap between the distal end surfaces in order to form a weld (56) between them by means of ultrasonic welding, wherein by forming the weld (56) the main planes of the ear tag plates (21) are brought substantially into each others extensions at the location of the weld (56).

2. Method according to claim 1, wherein the ear tag part holders (144, 149) are provided with a first straight base plane that may or may not be divided, wherein the first distal end surface when passing through the first pressure pin (120) through the first passage is brought in the extension of the first straight base plane.

3. Method according to claim 1 or 2, wherein the first transport direction (K) is horizontal, wherein the ear tag parts (2) are placed from above in the ear tag holders (144, 149).

4. Method according to any one of the preceding claims, wherein the welding device (105) is provided with a first pressure pin holder (119) having several first pressure pins (120) and a second pressure pin holder (153) having several second pressure pins (154), wherein the first pressure pins (120) and the second pressure pins (154) are positioned consecutively in the first transport direction (K), wherein simultaneously several welds (56) are formed at the location of overlaps that are consecutive in the first transport direction (K).

5. Method according to any one of the preceding claims, wherein the ear tag plates (21) of the individual ear tag parts (2) have a circular circumferential edge, and/or wherein the first coupling parts (22) comprise an ear piercing coupling shank that is oriented substantially transverse to the ear tag plate (21), and/or wherein the first coupling parts (22) comprise an ear piercing coupling shank that is centred with respect to the ear tag plate (21).

6. Method according to any one of the preceding claims, wherein the first conveyor (146) is provided with two chains (147, 148) that extend parallel to each other and that are built up from shackles that are connected to each other so as to hinge, wherein between the chains connection rods (149) extend that extend transverse to the transport direction (K) and that keep the shackles at a fixed mutual distance and between which the first passages are defined, wherein the ear tag part holders (144, 149) are formed by the shackles on which the ear tag plates (21) are situated and the connection rods against which the first coupling part (22) is situated for passing the ear tag parts along.

7. Method according to any one of the preceding claims, wherein in spatial form the ear tag parts (2) are identical except for optionally a unique identification code (25) on the ear tag plate (21).

8. Method according to any one of the preceding claims, wherein the ear tag parts (2) welded together are or will be provided with a unique identification code (25) on the ear tag plate (21).

9. Method for providing ear tags for the ears of cattle by means of a welding device (105), wherein the ear tags comprise an ear tag part (2) and an attachment part (1), wherein the ear tag part (2) is provided with an ear tag plate (21) to abut against the ear and a first coupling part (22) and wherein the attachment part (1) is provided with an attachment plate (11) to abut the counter side of the ear and a second coupling part (12) for coupling cooperation with the first coupling part (22), wherein the first coupling part (22) and the second coupling part (12) pierce the ear in coupling cooperation, wherein the welding device (105) is provided with a second conveyor (141) for transport of attachment parts (1) in a second transport direction (K), and a third pressure pin (120) having a third distal end surface and a fourth pressure pin (154) having a fourth distal end surface that can be moved towards each other (Z1; Z2) transverse to the second transport direction (K) for forming a welded joint between the distal end surfaces by means of ultrasonic welding, wherein the second conveyor (141) is provided with attachment part holders (112) consecutive in the second transport direction and second passages extending through the second conveyor transverse to the second transport direction, wherein the attachment part holders (112) are mutually positioned for holding the consecutive attachment parts (1) with an imposed intermediate distance (F) in which the attachment plates (11) partially overlap each other in abutting contact at the circumferential edge and the second passages are situated below the overlaps positioned in line in the second transport direction (K), wherein the method comprises placing individual attachment parts (1) in the attachment part holders (112) of the second conveyor (141), wherein the main planes of the attachment plates (11) are situated at the location of the overlap beyond each others extensions, transporting the placed attachment parts (11) towards the pressure pins (120, 154), and moving the pressure pins towards the overlap, wherein the third pressure pin (120) is passed through a second passage, wherein the attachment plates (11) are engaged at the location of the overlap between the distal end surfaces in order to form a weld (53) between them by means of ultrasonic welding, wherein by forming the weld (53) the main planes of the attachment plates (11) are brought substantially in each others extensions at the location of the weld (53).

10. Method according to claim 9, wherein the attachment part holders (112) are provided with a second straight base plane (111) that may or may not be divided, wherein the third distal end surface when passing through the third pressure pin (120) through the second passage is brought in the extension of the second straight base plane (111).

11. Method according to claim 9 or 10, wherein the second transport direction (K) is horizontal, wherein the attachment parts (1) are placed from above in the attachment part holders (112).

12. Method according to any one of the claims 9-11, wherein the welding device (105) is provided with a third pressure pin holder (119) having several third pressure pins (120) and a fourth pressure pin holder having several fourth pressure pins, wherein the first pressure pin (120) and the second pressure pin (154) are positioned consecutively in the second transport direction (K), wherein simultaneously several welds (53) are formed at the location of the overlaps that are consecutive in the second transport direction (K).

13. Method according to claim 9-12, wherein the attachment plates (11) of the individual attachment parts (1) have a circular circumferential edge, and/or wherein the second coupling parts (12) comprise a hollow accommodation bush that is oriented substantially transverse to the attachment plate (11), and/or wherein the second coupling parts (12) comprise a hollow accommodation bush that is centred with respect to the attachment plate (11).

14. Method according to any one of the preceding claims, wherein the second conveyor (141) is provided with two chains (142, 143) that extend parallel to each other and that are built up from shackles that are connected to each other so as to hinge, wherein between the chains connection bridges (145) extend that extend transverse to the transport direction (K) and that keep the shackles at a fixed mutual distance, wherein the attachment part holders (112) are formed by the connection bridges (145) on which the attachment plates (11) are situated.

15. Method according to claim 1 and 9, wherein the first and second transport direction (K) are parallel to each other, wherein preferably the first and third pressure pins (120) are provided on the same pressure pin holder (119) and/or wherein the second and fourth pressure pins (154) are provided on the same pressure pin holder (153), wherein the pressure pin holders (119, 153) between forming the welds move reciprocally between the first and second conveyor (141; 146).

16. Method according to claim 1 and 9, wherein the ear tag parts (2) that are welded together on the one hand and the attachment parts (1) that are welded together on the other hand are discharged from the welding device (105) in a first endless chain (4) and second endless chain (3), respectively, and as a chain are passed through in an ear tag application device (250), wherein the ear tag application device (250) is provided with a first separator for separating an individual ear tag part (2) from the first chain (4), a second separator for separating an individual attachment part (1) from the second chain (3), and a coupling device (259, 258) for bringing the first coupling part (22) and the second coupling part (12) in coupling cooperation in a pig's ear.

17. Assembly (3, 4) for providing ear tags of cattle, wherein the ear tags comprise an ear tag part (2) and an attachment part (1), wherein the ear tag part (2) is provided with an ear tag plate (21) to abut the ear and a first coupling part (22) and wherein the attachment part (1) is provided with an attachment plate (11) to abut the counter side of the ear and a second coupling part (12) for coupling cooperation with the first coupling part (22), wherein the first coupling part (22) and the second coupling part (12) pierce the ear in the coupling cooperation, wherein the assembly (3, 4) comprises multiple ear tag parts that form a first chain (4) and a second chain (3), wherein in the first chain (4) the tag plates (21) are positioned in line having a weld (56) in between and the main planes of the ear tag plates (21) are substantially in each others extensions at the location of the welds (56), wherein outside the welds (56) the ear tag plates (21) have a circular circumferential edge with a diameter around the first coupling part (22), wherein the intermediate distance (G) between consecutive first coupling parts (22) is smaller than the diameter of the ear tag plates (21), and wherein in the second chain (3) the attachment plates (11) are positioned in line having a weld (53) in between and the main planes of the attachment plates (11) are substantially in each others extensions at the location of the welds (53), wherein outside the welds (53) the attachment plates (11) have a circular circumferential edge with a diameter around the second coupling part (12), wherein the intermediate distance (F) between consecutive second coupling parts (12) is smaller than the diameter of the attachment plates (11).

## Patentansprüche

1. Verfahren zum Bereitstellen von Ohrmarken für die Ohren von Vieh mittels einer Schweißeinrichtung (105), wobei die Ohrmarke ein Ohrmarkenteil (2) und ein Befestigungsteil (1) aufweisen, wobei das Ohrmarkenteil (2) mit einer Ohrmarkenscheibe (21), um mit dem Ohr zu kontaktieren, und mit einem ersten Kopplungsteil (22) versehen ist und wobei das Befestigungsteil (1) mit einer Befestigungsscheibe (11), um mit einer Gegenseite des Ohrs zu kontaktieren, und einem zweiten Kopplungsteil (12) zur koppelnden Zusammenwirkung mit dem ersten Kopplungsteil (22) versehen ist, wobei das erste Kopplungsteil (22) und das zweite Kopplungsteil (12) das Ohr bei der koppelnden Zusammenwirkung durchstechen, wobei die Schweißeinrichtung (105) einen ersten Zuführer (146) zum Transportieren von Ohrmarkenteilen (2) in einer ersten Transportrichtung (K) und einen ersten Druckstift (120) mit einer ersten distalen Endoberfläche und einen zweiten Druckstift (154) mit einer zweiten distalen Endoberfläche aufweist, die zueinander (Z1, Z2) quer zu der ersten Transportrichtung (K) bewegt werden können, um eine Schweißverbindung zwischen den distalen Endoberflächen durch Ultraschallschweißen zu bilden, wobei der erste Zuführer (146) mit aufeinander folgenden Ohrmarkenteilhaltern (144, 149) in der ersten Transportrichtung und ersten Durchlässen, die sich durch den ersten Zuführer quer zu der ersten Transportrichtung erstrecken, versehen ist, wobei die Ohrmarkenteilhalter (144, 149) zueinander so positioniert sind, dass sie die aufeinander folgenden Ohrmarkenteile (2) mit einem eingestellten Zwischenabstand (G), bei dem sich die Ohrmarkenscheiben (21) teilweise in einem anstoßenden Kontakt an der Umfangskante überlappen, halten und dass die ersten Durchlässe unterhalb der Überlappungen angeordnet sind, die in einer Reihe in der ersten Transportrichtung (K) positioniert sind, wobei das Verfahren beinhaltet, dass einzelne Ohrmarkenteile (2) in den Ohrmarkenteilhaltern (144, 149) des ersten Zuführers (146) platziert werden, wobei die Hauptebenen der Ohrmarkenscheiben (21) an dem Ort der Überlappung zwischen den Ausdehnungen der jeweils anderen positioniert sind, wobei die platzierten Ohrmarkenteile zu den Druckstiften (120, 154) hin transportiert werden, und wobei die Druckstifte zu der Überlappung hin transportiert werden, wobei der erste Druckstift (120) durch einen ersten Durchlass hindurch bewegt wird, wobei die Ohrmarkenscheiben (21) an dem Ort der Überlappung zwischen den distalen Endoberflächen in Eingriff gebracht werden, um eine Verschweißung (56) zwischen diesen durch Ultraschallschweißen zu bilden, wobei durch Bilden der Verschweißung (56) die Hauptebenen der Ohrmarkenscheiben (21) im Wesentlichen in die Ausdehnungen voneinander an dem Ort der Verschweißung (56) gebracht werden.

2. Verfahren nach Anspruch 1, bei dem die Ohrmarkenteilhalter (144, 149) mit einer ersten geraden Grundebene versehen sind, die optional geteilt sein kann, wobei die erste distale Endoberfläche, wenn sie den ersten Druckstift (120) durch den ersten Durchlass bewegt, in die Ausdehnung der ersten geraden Grundebene gebracht wird.

3. Verfahren nach Anspruch 1 oder 2, bei dem die Transportrichtung (K) horizontal ist, wobei die Ohrmarkenteile (2) von oben in den Ohrmarkenteilhaltern (144, 149) platziert werden.

4. Verfahren nach einem der vorhergehenden Ansprüche, bei dem die Schweißeinrichtung (105) mit einem ersten Druckstifthalter (119), der mehrere erste Druckstifte (120) aufweist, und einem zweiten Druckstifthalter (153) mit mehreren zweiten Druckstiften (154) versehen ist, wobei die ersten Druckstifte (120) und die zweiten Druckstifte (154) aufeinander folgend in der ersten Transportrichtung (K) positioniert sind, wobei gleichzeitig mehrere Verschweißungen (56) an dem Ort der Überlappung ausgebildet werden, die in der ersten Transportrichtung (K) aufeinander folgen.

5. Verfahren nach einem der vorhergehenden Ansprüche, wobei die Ohrmarkenscheiben (21) der einzelnen Ohrmarkenteile (2) eine kreisförmige Umfangskante aufweisen und/oder wobei die ersten Kopplungsteile (22) einen Ohrdurchstechungskopplungsschaft aufweisen, der im Wesentlichen quer zu der Ohrmarkenscheibe (21) ausgerichtet ist und/oder wobei die ersten Kopplungsteile (22) einen Ohrdurchstechungskopplungsschaft aufweisen, der bezüglich der Ohrmarkenscheibe (21) zentriert ist.

6. Verfahren nach einem der vorhergehenden Ansprüche, bei dem der erste Zuführer (146) mit zwei Ketten (147, 148) versehen ist, die sich parallel zueinander erstrecken und aus Bügeln aufgebaut sind, die so miteinander verbunden sind, dass sie drehbar sind, wobei sich zwischen den Ketten Verbindungsstangen (149) erstrecken, die sich quer zu der Transportrichtung (K) erstrecken und welche die Bügel mit einem festen Abstand zueinander halten und zwischen denen die ersten Durchlässe definiert sind, wobei die Ohrmarkenteilehalter (144, 149) durch die Glieder, an denen die Ohrmarkenteilscheiben (21) angeordnet sind, und die Verbindungsstangen, gegen welche der erste Kopplungsteil (22) angeordnet ist, um die Ohrmarkenteile weiterzubewegen, gebildet werden.

7. Verfahren nach einem der vorhergehenden Ansprüche, bei dem die Ohrmarkenteile (2) in der räumlichen Form identisch sind, abgesehen von optional einem individuellen Identifizierungscode (25) auf der Ohrmarkenscheibe (21).

8. Verfahren nach einem der vorhergehenden Ansprüche, bei dem die Ohrmarkenteile (2), die verschweißt sind, mit einem individuellen Identifizierungscode (25) auf der Ohrmarkenscheibe (21) versehen sind oder werden.

9. Verfahren zum Bereitstellen von Ohrmarken für die Ohren von Vieh mittels eine Schweißeinrichtung (105), wobei die Ohrmarke ein Ohrmarkenteil (2) und ein Befestigungsteil (1) aufweisen, wobei das Ohrmarkenteil (2) mit einer Ohrmarkenscheibe (21), um mit dem Ohr zu kontaktieren, und einem ersten Kopplungsteil (22) versehen ist, und wobei das Befestigungsteil (1) mit einer Befestigungsscheibe (11), um mit der Gegenseite des Ohrs zu kontaktieren, und mit einem zweiten Kopplungsteil (12) zum koppelnden Zusammenwirken mit dem ersten Kopplungsteil (22) versehen ist, wobei das erste Kopplungsteil (22) und das zweite Kopplungsteil (12) das Ohr in einer koppelnden Zusammenwirkung durchstechen, wobei die Schweißeinrichtung (105) mit einem zweiten Zuführer (141) zum Transportieren der Befestigungsteile (1) in einer zweiten Transportrichtung (K) und einem dritten Druckstift (120) mit einer dritten distalen Endoberfläche und einem vierten Druckstift (154) mit einer vierten distalen Endoberfläche, die zueinander (Z1, Z2) quer zu der zweiten Transportrichtung (K) bewegt werden können, um eine Schweißverbindung zwischen den distalen Endoberflächen durch Ultraschallschweißen zu bilden, versehen ist, wobei der zweite Zuführer (141) mit Befestigungsteil haltern (112), die aufeinander in der zweiten Transportrichtung folgen, und zweiten Durchlässen, die sich durch den zweiten Zuführer quer zu der zweiten Transportrichtung erstrecken, versehen ist, wobei die Befestigungsteilhalter (112) zueinander positioniert sind, um die aufeinander folgenden Befestigungsteile (1) mit einem eingestellten Zwischenabstand (F), mit dem die Befestigungsscheiben (11) teilweise einander in an der Umfangskante kontaktierendem Kontakt überlappen, positioniert sind und die zweiten Durchlässe unterhalb der Überlappungen, die in der zweiten Transportrichtung (K) aufgereiht positioniert sind, angeordnet sind, wobei das Verfahren aufweist, dass einzelne Befestigungsteile (1) in den Befestigungsteilhaltern (112) des zweiten Zuführers (141) platziert werden, wobei die Hauptebenen der Befestigungsscheiben (11) an dem Ort der Überlappung jenseits der Ausdehnungen der anderen positioniert werden, wobei die platzierten Befestigungsteile (11) zu den Druckstiften (120, 154) hin transportiert werden, und wobei die Druckstifte zu der Überlappung transportiert werden, wobei der dritte Druckstift (120) durch einen zweiten Durchlass hindurch bewegt wird, wobei die Befestigungsscheiben (11) an dem Ort der Überlappung zwischen den distalen Endoberflächen in Eingriff gebracht werden, um eine Verschweißung (53) zwischen diesen durch Ultraschallschweißen zu bilden, wobei durch Bilden der Verschweißung (53) die Hauptebenen der Befestigungsscheiben (11) im Wesentlichen in die Ausdehnungen der jeweils anderen an dem Ort der Verschweißung (53) gebracht werden.

10. Verfahren nach Anspruch 9, bei dem die Befestigungsteilhalter (112) mit einer zweiten geraden Grundebene (111) versehen sind, die optional geteilt sein kann, wobei sich die dritte distale Endoberfläche, wenn sie den dritten Druckstift (120) durch den zweiten Durchlass hindurchbewegt, in die Ausdehnung der zweiten geraden Grundebene (111) bewegt.

11. Verfahren nach Anspruch 9 oder 10, bei dem die zweite Transportrichtung (K) horizontal ist, wobei die Befestigungsteile (1) von oben in den Befestigungsteilehaltern (112) platziert werden.

12. Verfahren nach einem der Ansprüche 9 bis 11, bei dem die Schweißeinrichtung (105) mit einem dritten Druckstifthalter (110) mit mehreren dritten Druckstiften (120) und einem vierten Druckstifthalter mit mehreren vierten Druckstiften versehen ist, wobei der erste Druckstift (120) und der zweite Druckstift (154) aufeinander folgend in der zweiten Transportrichtung (K) positioniert sind, wobei gleichzeitig mehrere Verschweißungen (53) an dem Ort der Überlappungen ausgebildet werden, die in der zweiten Transportrichtung (K) aufeinander folgen.

13. Verfahren nach einem der Ansprüche 9 bis 12, bei dem die Befestigungsscheiben (11) der einzelnen Befestigungsteile (1) eine kreisförmige Umfangskante aufweisen und/oder bei dem die zweiten Kopplungsteile (12) eine hohle Aufnahmebuchse aufweisen, die im Wesentlichen quer zu der Befestigungsscheibe (11) ausgerichtet ist und/oder bei dem die zweiten Kopplungsteile (12) eine hohle Aufnahmebuchse aufweisen, die bezüglich der Befestigungsscheibe (11) zentriert ist.

14. Verfahren nach einem der vorhergehenden Ansprüche, bei dem der zweite Zuführer (141) mit zwei Ketten (142, 143) versehen ist, die sich parallel zueinander erstrecken und die aus Bügeln, die miteinander drehbar verbunden sind, aufgebaut sind, wobei sich zwischen den Ketten Verbindungsbrücken (145) erstrecken, die sich quer zu der Transportrichtung (K) erstrecken und welche die Bügel an einem festen Abstand halten, wobei die Befestigungsteilhalter (112) durch die Verbindungsbrücken (145) gebildet werden, auf denen die Befestigungsscheiben (11) angeordnet sind.

15. Verfahren nach Anspruch 1 und 9, bei dem die erste und die zweite Transportrichtung (K) zueinander parallel sind, wobei vorzugsweise die ersten und dritten Druckstifte (120) auf dem gleichen Druckstifthalter (119) vorgesehen sind und/oder wobei die zweiten und vierten Druckstifte (154) auf dem gleichen Druckstifthalter (153) vorgesehen sind, wobei sich die Druckstifthalter (119, 153) zwischen dem Ausbilden der Verschweißungen zwischen dem ersten und dem zweiten Zuführer (141, 146) hin und her bewegen.

16. Verfahren nach Anspruch 1 und 9, bei dem die Ohrmarkenteile (2), die auf der einen Seite verschweißt werden, und die Befestigungsteile (1), die an der anderen Seite verschweißt werden, aus der Schweißeinrichtung (105) jeweils in einer ersten endlosen Kette (4) und einer zweiten endlosen Kette (5) ausgegeben werden, und sie als eine Kette durch eine Ohrmarkenaufbringeinrichtung (250) hindurchbewegt werden, wobei die Ohrmarkenaufbringeinrichtung (250) mit einer ersten Trenneinrichtung zum Trennen eines einzelnen Ohrmarkenteils (2) von der ersten Kette (4), einer zweiten Trenneinrichtung zum Trennen eines einzelnen Befestigungsteils (1) von der zweiten Kette (3), und einer Kopplungseinrichtung (259, 258) versehen ist, um den ersten Kopplungsteil (22) und den zweiten Kopplungsteil (12) in eine koppelnde Zusammenwirkung in einem Ohr eines Schweins zu bringen.

17. Anordnung (3, 4), um Ohrmarken von Vieh bereitzustellen, wobei die Ohrmarke ein Ohrmarkenteil (2) und ein Befestigungsteil (1) aufweisen, wobei das Ohrmarkenteil (2) mit einer Ohrmarkenscheibe (21), um mit dem Ohr zu kontaktieren, und einem ersten Kopplungsteil (22) versehen ist, und wobei das Befestigungsteil (1) mit einer Befestigungsscheibe (11), um mit der Gegenseite des Ohrs zu kontaktieren, und einem zweiten Kopplungsteil (12) versehen ist, um koppelnd mit dem zweiten Kopplungsteil (22) zusammenzuwirken, wobei das erste Kopplungsteil (22) und das zweite Kopplungsteil (12) das Ohr in der koppelnden Zusammenwirkung durchstechen, wobei die Anordnung (3, 4) mehrere Ohrmarkenteile aufweist, welche eine erste Kette (4) und eine zweite Kette (3) bilden, wobei die Anhängerscheiben (21) in der ersten Kette (4) in einer Reihe mit einer Verschweißung (56) dazwischen positioniert sind, und die Hauptebenen der Ohrmarkenscheiben (21) im Wesentlichen in der Ausdehnung voneinander an dem Ort der Verschweißungen (56) sind, wobei die Ohrmarkenscheiben (21) außerhalb der Verschweißungen (56) eine kreisförmige Umfangskante mit einem Durchmesser um dem ersten Kopplungsteil (22) aufweisen, wobei der Zwischenabstand (G) zwischen aufeinander folgenden ersten Kopplungsteilen (22) kleiner ist als der Durchmesser der Ohrmarkenscheiben (21) und wobei bei der zweiten Kette (3) die Befestigungsscheiben (11) in einer Reihe mit einer Verschweißung (53) dazwischen positioniert sind und die Hauptebenen der Befestigungsscheiben (11) im Wesentlichen in der Ausdehnung voneinander am Ort der Verschweißung (53) sind, wobei die Befestigungsscheiben (11) außerhalb der Verschweißungen (53) eine kreisförmige Umfangskante mit einem Durchmesser um das zweite Kopplungsteil (12) herum aufweisen, wobei der Zwischenabstand (F) zwischen aufeinander folgenden zweiten Kopplungsteilen (12) kleiner als der Durchmesser der Befestigungsscheiben (11) ist.

## Revendications

1. Procédé destiné à fournir des étiquettes d'oreille pour les oreilles des bestiaux, au moyen d'un dispositif de soudage (105), dans lequel les étiquettes d'oreille comprennent une partie d'étiquette d'oreille (2) et une partie de fixation (1), dans lequel la partie d'étiquette d'oreille (2) est prévue avec une plaque d'étiquette d'oreille (21) pour venir en butée contre l'oreille et une première partie de couplage (22) et dans lequel la partie de fixation (1) est prévue avec une plaque de fixation (11) pour venir en butée contre le côté arrière de l'oreille et une seconde partie de couplage (12) pour la coopération de couplage avec la première partie de couplage (22), dans lequel la première partie de couplage (22) et la seconde partie de couplage (12) percent l'oreille en coopération de couplage, dans lequel le dispositif de soudage (105) est prévu avec un premier convoyeur (146) pour transporter les parties d'étiquette d'oreille (2) dans une première direction de transport (K), et une première broche de pression (120) ayant une première surface d'extrémité distale et une deuxième broche de pression (154) ayant une deuxième surface d'extrémité distale qui peuvent être déplacées l'une vers l'autre (Z1 ; Z2) de manière transversale par rapport à la première direction de transport (K) pour former un joint soudé entre les surfaces d'extrémité distales au moyen du soudage par ultrasons, dans lequel le premier convoyeur (146) est prévu avec des supports de partie d'étiquette d'oreille consécutifs (144, 149) dans la première direction de transport et les premiers passages s'étendant à travers le premier convoyeur de manière transversale par rapport à la première direction de transport, dans lequel les supports de partie d'étiquette d'oreille (144, 149) sont mutuellement positionnés pour maintenir les parties d'étiquette d'oreille (2) consécutives, avec une distance intermédiaire imposée (G) dans laquelle les plaques d'étiquette d'oreille (21) se chevauchent partiellement en contact de butée au niveau du bord circonférentiel et les premiers passages sont situés au-dessous des chevauchements alignés dans la première direction de transport (K), dans lequel le procédé comprend les étapes consistant à placer des parties d'étiquette d'oreille individuelles (2) dans les supports de partie d'étiquette d'oreille (144, 149) du premier convoyeur (146), dans lequel les plans principaux des plaques d'étiquette d'oreille (21) sont situés à l'emplacement du chevauchement au-delà de chacune des autres extensions, transporter les parties d'étiquette d'oreille placées vers les broches de pression (120, 154), et déplacer les broches de pression vers le chevauchement, dans lequel la première broche de pression (120) passe à travers un premier passage, dans lequel les plaques d'étiquette d'oreille (21) sont mises en prise à l'emplacement de chevauchement entre les surfaces d'extrémité distales afin de former une soudure (56) entre elles au moyen du soudage par ultrasons, dans lequel, en formant la soudure (56), les plans principaux des plaques d'étiquette d'oreille (21) sont amenés sensiblement dans chacune des autres extensions à l'emplacement de la soudure (56).

2. Procédé selon la revendication 1, dans lequel les supports de partie d'étiquette d'oreille (144, 149) sont prévus avec un premier plan de base droit qui peut ou peut ne pas être divisé, dans lequel la première surface d'extrémité distale, lorsqu'elle passe à travers la première broche de pression (120) par le premier passage, est amenée dans l'extension du premier plan de base droit.

3. Procédé selon la revendication 1 ou 2, dans lequel la première direction de transport (K) est horizontale, dans lequel les parties d'étiquette d'oreille (2) sont placées à partir du dessus dans les supports d'étiquette d'oreille (144, 149).

4. Procédé selon l'une quelconque des revendications précédentes, dans lequel le dispositif de soudage (105) est prévu avec un premier support de broche de pression (119) ayant plusieurs premières broches de pression (120) et un deuxième support de broche de pression (153) ayant plusieurs deuxièmes broches de pression (154), dans lequel les premières broches de pression (120) et les deuxièmes broches de pression (154) sont positionnées consécutivement dans la première direction de transport (K), dans lequel on forme simultanément plusieurs soudures (56) à l'emplacement des chevauchements qui sont consécutifs dans la première direction de transport (K).

5. Procédé selon l'une quelconque des revendications précédentes, dans lequel les plaques d'étiquette d'oreille (21) des parties d'étiquette d'oreille (2) individuelles ont un bord circonférentiel circulaire, et/ou dans lequel les premières parties de couplage (22) comprennent une tige de couplage de perçage d'oreille qui est orientée de manière sensiblement transversale par rapport à la plaque d'étiquette d'oreille (21), et/ou dans lequel les premières parties de couplage (22) comprennent une tige de couplage de perçage d'oreille qui est centrée par rapport à la plaque d'étiquette d'oreille (21).

6. Procédé selon l'une quelconque des revendications précédentes, dans lequel le premier convoyeur (146) est prévu avec deux chaînes (147, 148) qui s'étendent parallèlement entre elles et qui sont composées de maillons d'attache qui sont raccordés entre eux afin de s'articuler, dans lequel entre les chaînes, s'étendent des tiges de raccordement (149) qui s'étendent de manière transversale par rapport à la direction de transport (K) et qui maintiennent les maillons d'attache à une distance mutuelle fixe et entre lesquels les premiers passages sont définis, dans lequel les supports de partie d'étiquette d'oreille (144, 149) sont formés par les maillons d'attache sur lesquels les plaques d'étiquette d'oreille (21) sont positionnées et les tiges de raccordement contre lesquelles la première partie de couplage (22) est située pour faire passer les parties d'étiquette d'oreille.

7. Procédé selon l'une quelconque des revendications précédentes, dans lequel, dans la forme spatiale, les parties d'étiquette d'oreille (2) sont identiques excepté facultativement pour un code d'identification unique (25) sur la plaque d'étiquette d'oreille (21).

8. Procédé selon l'une quelconque des revendications précédentes, dans lequel les parties d'étiquette d'oreille (2) soudées ensemble sont ou seront prévues avec un code d'identification unique (25) sur la plaque d'étiquette d'oreille (21).

9. Procédé destiné à fournir des étiquettes d'oreille pour les oreilles des bestiaux au moyen d'un dispositif de soudage (105), dans lequel les étiquettes d'oreille comprennent une partie d'étiquette d'oreille (2) et une partie de fixation (1), dans lequel la partie d'étiquette d'oreille (2) est prévue avec une plaque d'étiquette d'oreille (21) pour venir en butée contre l'oreille et une première partie de couplage (22) et dans lequel la partie de fixation (1) est prévue avec une plaque de fixation (11) pour venir en butée contre le côté arrière de l'oreille et une seconde partie de couplage (12) pour la coopération de couplage avec la première partie de couplage (22), dans lequel la première partie de couplage (22) et la seconde partie de couplage (12) percent l'oreille en coopération de couplage, dans lequel le dispositif de soudage (105) est prévu avec un second convoyeur (141) pour transporter les parties de fixation (1) dans une seconde direction de transport (K), et une troisième broche de pression (120) ayant une troisième surface d'extrémité distale et une quatrième broche de pression (154) ayant une quatrième surface d'extrémité distale qui peuvent être déplacées l'une vers l'autre (Z1 ; Z2) de manière transversale par rapport à la seconde direction de transport (K) pour former un joint soudé entre les surfaces d'extrémité distales au moyen du soudage par ultrasons, dans lequel le second convoyeur (141) est prévu avec des supports de partie de fixation (112) consécutive dans la seconde direction de transport, et des seconds passages s'étendant à travers le second convoyeur de manière transversale par rapport à la seconde direction de transport, dans lequel les supports de partie de fixation (112) sont mutuellement positionnés pour maintenir les parties de fixation consécutives (1), avec une distance intermédiaire imposée (F) dans laquelle les plaques de fixation (11) se chevauchent partiellement en contact de butée au niveau du bord circonférentiel et les seconds passages sont situés au-dessous des chevauchements alignés dans la seconde direction de transport (K), dans lequel le procédé comprend les étapes consistant à placer les parties de fixation individuelles (1) dans les supports de partie de fixation (112) du second convoyeur (141), dans lequel les plans principaux des plaques de fixation (11) sont positionnés à l'emplacement du chevauchement au-delà de chacune des autres extensions, transporter les parties de fixation (11) placées vers les broches de pression (120, 154) et déplacer les broches de pression vers le chevauchement, dans lequel la troisième broche de pression (120) passe à travers un second passage, dans lequel les plaques de fixation (11) sont mises en prise à l'emplacement du chevauchement entre les surfaces d'extrémité distales afin de former une soudure (53) entre elles au moyen du soudage par ultrasons, dans lequel en formant la soudure (53), les plans principaux des plaques de fixation (11) sont amenés sensiblement dans chacune des autres extensions à l'emplacement de la soudure (53).

10. Procédé selon la revendication 9, dans lequel les supports de partie de fixation (112) sont prévus avec un second plan de base droit (111) qui peut ou peut ne pas être divisé, dans lequel la troisième surface d'extrémité distale lorsqu'elle passe à travers la troisième broche de pression (120) à travers le second passage, est amenée dans l'extension du second plan de base droit (111).

11. Procédé selon la revendication 9 ou 10, dans lequel la seconde direction de transport (K) est horizontale, dans lequel les parties de fixation (1) sont placées à partir de dessus dans les supports de partie de fixation (112).

12. Procédé selon l'une quelconque des revendications 9 à 11, dans lequel le dispositif de soudage (105) est prévu avec un troisième support de broche de pression (119) ayant plusieurs troisièmes broches de pression (120) et un quatrième support de broche de pression ayant plusieurs quatrièmes broches de pression, dans lequel la première broche de pression (120) et la deuxième broche de pression (154) sont positionnées consécutivement dans la seconde direction de transport (K), dans lequel on forme simultanément plusieurs soudures (53) à l'emplacement des chevauchements qui sont consécutifs dans la seconde direction de transport (K).

13. Procédé selon les revendications 9 à 12, dans lequel les plaques de fixation (11) des parties de fixation (1) individuelles ont un bord circonférentiel circulaire, et/ou dans lequel les secondes parties de couplage (12) comprennent une douille de logement creuse qui est orientée de manière sensiblement transversale par rapport à la plaque de fixation (11), et/ou dans lequel les secondes parties de couplage (12) comprennent une douille de logement creuse qui est centrée par rapport à la plaque de fixation (11).

14. Procédé selon l'une quelconque des revendications précédentes, dans lequel le second convoyeur (141) est prévu avec deux chaînes (142, 143) qui s'étendent parallèlement entre elles et qui sont composées de maillons d'attache raccordés entre eux afin de s'articuler, dans lequel entre les chaînes, s'étendent des ponts de raccordement (145) qui s'étendent de manière transversale par rapport à la direction de transport (K) et qui maintiennent les maillons d'attache à une distance mutuelle fixe, dans lequel les supports de partie de fixation (112) sont formés par des ponts de raccordement (145) sur lesquels les parties de fixation (11) sont situées.

15. Procédé selon les revendications 1 et 9, dans lequel les première et seconde directions de transport (K) sont parallèles entre elles, dans lequel de préférence, les première et troisième broches de pression (120) sont prévues sur le même support de broche de pression (119), et/ou dans lequel les deuxième et quatrième broches de pression (154) sont prévues sur le même support de broche de pression (153), dans lequel les supports de broche de pression (119, 153) entre la formation des soudures se déplacent selon un mouvement de va-et-vient entre les premier et second convoyeurs (141 ; 146).

16. Procédé selon les revendications 1 et 9, dans lequel les parties d'étiquette d'oreille (2) soudées ensemble d'une part et les parties de fixation (1) soudées ensemble d'autre part, sont déchargées du dispositif de soudage (105) dans une première chaîne sans fin (4) et une seconde chaîne sans fin (3) respectivement, et en tant que chaînes, passent à travers un dispositif d'application d'étiquette d'oreille (250), dans lequel le dispositif d'application d'étiquette d'oreille (250) est prévu avec un premier séparateur pour séparer une partie d'étiquette d'oreille (2) individuelle de la première chaîne (4), un second séparateur pour séparer une pièce de fixation (1) individuelle de la seconde chaîne (3), et un dispositif de couplage (259, 258) pour amener la première partie de couplage (22) et la seconde partie de couplage (12) en coopération de couplage dans l'oreille d'un cochon.

17. Assemblage (3, 4) destiné à fournir des étiquettes d'oreille pour bestiaux, dans lequel les étiquettes d'oreille comprennent une partie d'étiquette d'oreille (2) et une partie de fixation (1), dans lequel la partie d'étiquette d'oreille (2) est prévue avec une plaque d'étiquette d'oreille (21) pour venir en butée contre l'oreille et une première partie de couplage (22) et dans lequel la partie de fixation (1) est prévue avec une plaque de fixation (11) pour venir en butée contre le côté arrière de l'oreille et une seconde partie de couplage (12) pour la coopération de couplage avec la première partie de couplage (22), dans lequel la première partie de couplage (22) et la seconde partie de couplage (12) percent l'oreille en coopération de couplage, dans lequel l'assemblage (3, 4) comprend plusieurs parties d'étiquette d'oreille qui forment une première chaîne (4) et une seconde chaîne (3), dans lequel, dans la première chaîne (4), les plaques d'étiquette (21) sont alignées avec une soudure (56) entre elles, et les plans principaux des plaques d'étiquette d'oreille (21) sont sensiblement dans chacune des autres extensions à l'emplacement des soudures (56), dans lequel, à l'extérieur des soudures (56), les plaques d'étiquette d'oreille (21) ont un bord circonférentiel circulaire avec un diamètre autour de la première partie de couplage (22), dans lequel la distance intermédiaire (G) entre les premières parties de couplage (22) consécutives est inférieure au diamètre des plaques d'étiquette d'oreille (21), et dans lequel, dans la seconde chaîne (3), les plaques de fixation (11) sont alignées en ayant une soudure (53) entre elles, et les plans principaux des plaques de fixation (11) sont sensiblement dans chacune des autres extensions à l'emplacement des soudures (53), dans lequel, à l'extérieur des soudures (53), les plaques de fixation (11) ont un bord circonférentiel circulaire avec un diamètre autour de la seconde partie de couplage (12), dans lequel la distance intermédiaire (F) entre les secondes parties de couplage (12) consécutives est inférieure au diamètre des plaques de fixation (11).
